# EUROPEAN PATENT SPECIFICATION

(11) **EP 0 242 402 B1**
(45) Date of publication and mention of the grant of the patent: **09.03.1994**
(21) Application number: 86905936.0
(22) Date of filing: 08.10.1986
(51) Int. Cl.: H01F 7/16

(54) **DEVICE FOR CONFIRMING OPERATION OF ELECTROMAGNETIC ACTUATOR**
ANORDNUNG ZUR FESTSTELLUNG DES FUNKTIONIERENS EINES ELEKTROMAGNETISCHEN BETÄTIGERS
DISPOSITIF PERMETTANT DE CONFIRMER LE FONCTIONNEMENT D'UN ACTUATEUR ELECTROMAGNETIQUE

(30) Priority: 11.10.1985 JP 226347/85
(43) Date of publication of application: 28.10.1987
(73) Proprietor: MITSUBISHI MINING & CEMENT CO., LTD., Tokyo 100 (JP); IWASAKI ELECTRONICS CO., LTD., Kyoto-shi Kyoto 612 (JP)
(72) Inventor: UETSUHARA, Tokio 1-9-2-601, Shirahata 3-chome, Saitama 336 (JP); IIO, Kenji Kyushu Of.of Iwasaki Electr.Co.Ltd., Fukuoka 823 (JP)
(74) Representative: Casalonga, Axel
(86) International application number: PCT/JP86/00513
(87) International publication number: WO 87/02506

(56) References cited:
- DE-A- 2 102 595
- GB-A- 1 251 165
- JP-A- 5 468 105
- JP-B- 4 822 609
- JP-U- 5 355 623
- JP-Y- 5 353 023
- JP-Y- 5 353 024
- US-A- 3 946 285
- PATENT ABSTRACTS OF JAPAN, vol. 6, no. 107 (E-113)[985], 17th June 1982; & JP-A-57 36 819
- PATENT ABSTRACTS OF JAPAN, vol. 7, no. 5 (M-184)[1150], 11th January 1983; & JP-A-57 163 784

## Description

The present invention generally relates to an operation confirming device for an electromagnetic actuator which can electrically confirm mechanical shift of a movable core of the electromagnetic actuator or of a mechanism connected to the movable core caused by applying electric energy to the electromagnetic actuator.

A conventional device for confirming shift operation of a movable core of electromagnetic actuator has commonly employed an electric point mechanically connected to a movable core of the actuator. However, such a conventional device has essentially provided the following demerits or problems.
(1) Mechanism for connecting between the electromagnetic actuator and the electric point is complicated.
(2) The electric contact point has inherent demerits; that is, treatments for water proof, dust proof, moisture proof are complicated, and a lifetime of this electric contact point on account of influence of contact repetition should be considered.
(3) Switching operation of this electric contact point is checked through an electric signal, so that an extra power source and an electric wire for transmitting such signal are additionally required.
(4) The above mentioned problems make the manufacturing cost of this electromagnetic actuator increase.

US-A-3946285 discloses a detecting device for a solenoid control system wherein the duration of energization of the solenoid is a function of the workload imposed thereon. The detecting device detects the time when the plunger is seated in the solenoid by means of a comparator detecting the transition from a low to a high to a low which produces a cusp indicative pulse for deenergizing the solenoid.

Furthermore, JP-A-5648105 discloses a solenoid actuator device having a permanent magnet fixed to the stationary core and a specific construction of the movable core to achieve a smaller reset spring characteristic. In this document an actuator is also suggested in which the movable and fixed cores self hold the attracted state owing to a magnetic flux of the permanent magnet. claimed, the electromagnetic actuator of the invention comprises a stationary core, a movable core facingly arranged with respect to the stationary core and forming a closed magnetic circuit together with the stationary core, an electric coil wound around the closed magnetic circuit for generating a first magnetic flux therein when the electric coil is supplied with an electric current, and a permanent magnet generating a second magnetic flux in the closed magnetic circuit. According to the invention, the electromagnetic actuator further comprises a movable core shift detector comprising a detection resistor and a differentiating circuit connected to the electric coil for confirming the shift operation of the movable core with respect to the stationary core by detecting the time of completion of the shift operation by means of transitional fluctuating wave-form of the DC current applied to said electric coil. The permanent magnet is fixed to the stationary core or to the movable core to generate the second magnetic flux which dividingly flows in parallel to and is overlapped with the first magnetic flux, the first and second magnetic fluxes acting in the same direction on the movable core during the shift operation and providing an extremely remarkable falling voltage in the detection resistor and a corresponding differentiated signal at the output of the differentiating circuit at the time of completion of the shift operation.

The present invention can provide the following effects and thus will be of avail to various industries and private uses.
(1) The device can remove contact point, so that the reliability of operation confirming for the electromagnetic actuator can be remarkably improved.
(2) The mechanism or device attached to the electromagnetic actuator for operation confirming can be simplified, and thus the whole structure of the device will become simple.
(3) The electric wire for an electric signal to perform the confirming operation, always required in the conventional devices, can be eliminated by arranging the movable core shift detector at an operating wire for controlling the electromagnetic actuator near by the power source. Therefore, the present invention can be broadly used for a remote controlled electromagnetic actuator to provide excellent economic advantages.
(4) The present invention can contribute to decrease the size, weight and cost of the operation confirming device for electromagnetic actuator, and to improve reliability thereof.

The invention will be better understood in view of the description of an example illustrated by the enclosed drawings.
Fig.1 is a schematic illustration for explaining the first embodiment of the present invention;
Fig.2 is a circuit diagram showing the composition of the movable core shift detector which is a component of the first embodiment shown in Fig.1;
Fig.3 is a graph showing various signal waves generated by the device of first embodiment shown in Fig.1; and
Fig.4 is a schematic illustration showing the second embodiment which is adapted for a bistable latching operation.

Hereinbelow, the present invention will be explained in conjunction with the accompanying drawings.

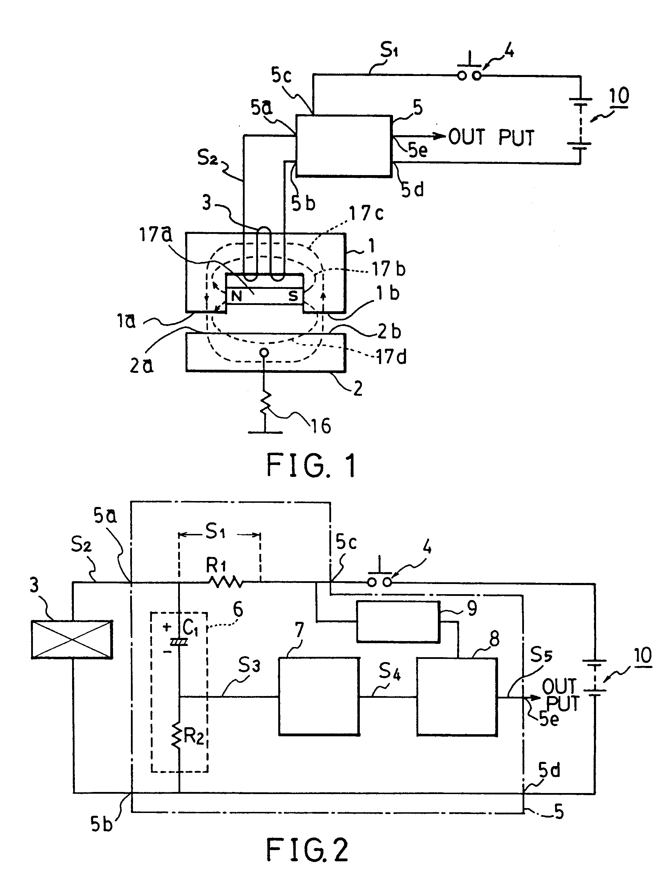

Fig.1 shows the first embodiment of the present invention. In the drawing, the reference numeral 1 denotes a stationary core containing magnetic pole faces 1a and 1b. The reference numeral 2 denotes a movable core 2 containing magnetic pole faces 2a and 2b. The cores 1 and 2 are so arranged that their opposite faces can be moved close to and apart from each other through gaps.

An electric coil 3 is wound around the stationary core 1 to energize a closed magnetic circuit composed of the stationary core 1 and the movable core 2 when the electric coil 3 is supplied with electric current.

A permanent magnet 17a is fixed to the stationary core 1. In the closed magnetic circuit consisting of the stationary core 1 and the movable core 2, this permanent magnet 17a is intended to generate the second magnetic fluxes 17b and 17d which dividingly flow in parallel to the first magnetic flux 17c generated when the electric coil 3 is energized.

The reference numeral 4 denotes a switch for turning on or off a DC power source 10.

A spring 16 is so arranged as to apply mechanical urging force to the movable core 2 to maintain a predetermined distance between the magnetic pole faces 1a and 1b of the stationary core 1 and the magnetic pole faces 2a and 2b of the movable core 2.

The reference numeral 5 denotes a movable core shift detector. The movable core 2 is forcibly shifted toward the stationary core 1 while DC current is supplied to the electric coil 3. Thus the detector 5 detects the time when this shift operation is completed, by means of transitional fluctuating wave of the applied DC current.

Hereinbelow, the movable core shift detector 5 will be explained in detail about its composition in conjunction with Fig.2.

The positive terminal of the DC power source 10 is connected to one end of the switch 4. The other end of the switch 4 is connected to a terminal 5c of the movable core shift detector 5 and finally connected to the negative terminal of the DC power source 10 via a series connected circuit composed of a resistor R1, a capacitor C1, and a resistor R2. This resistor R1 is adapted for detecting current wave-form. The series connected circuit composed of the capacitor C1 and the resistor R2 functions as a differentiating circuit 6.

One end of the electric coil 3 is connected to the junction between the resistor R1 and the capacitor C1 through a terminal 5a of the movable core shift detector 5. The other end of the electric coil 3 is connected to the negative terminal of the DC power source 10 through terminals 5b and 5d of the movable core shift detector 5.

The junction between the capacitor C1 and the resistor R2; which compose the differentiating circuit 6, is connected to a sequence control device, not shown, through a level slice wave form shaping circuit 7, a control signal output circuit 8 and an output terminal 5e of the movable core shift detector 5. The other end of the switch 4 is further connected to the control signal output circuit 8 through the terminal 5c and a forbidding pulse output circuit 9.

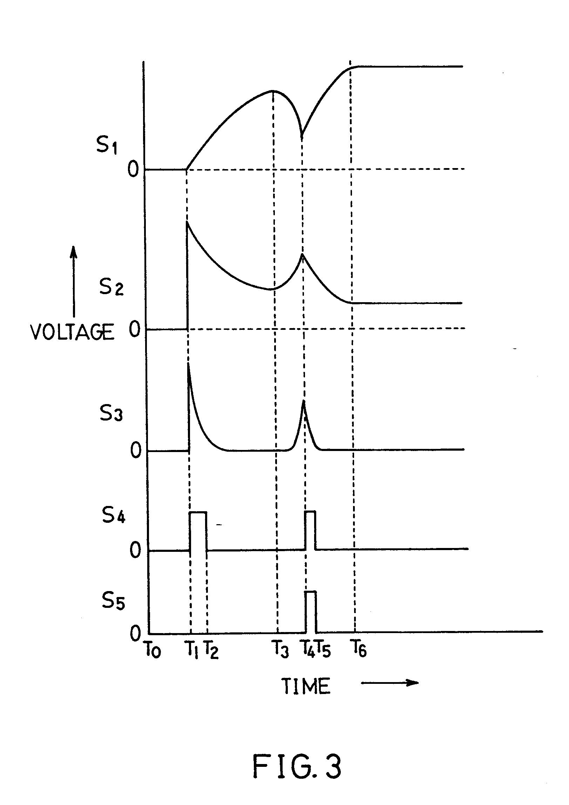

Nextly, an operation of this embodiment will be explained in conjunction with the wave forms shown in Fig.3.

When the switch 4 is kept in off position and the electric coil 3 is not energized, the predetermined distance is also kept between respective pairs of the magnetic pole faces 1a and 2a and 1b and 2b of the stationary core 1 and the movable core 2, faced each other as shown in Fig.1 on account of the mechanical urging force of the spring 16. Under this condition, if the switch 4 is turned on at the time T1, the voltage drop S1 of the resistor R1 will rise as an exponential function and arrive at the peak at the time T3 as shown in Fig. 3. Then, it will fall to predetermined value at the time T4 and change to rising in an exponential function curve, again. Finally, it will arrive at its saturated position at the time T6.

In this curve, the time T3 corresponds to the shift beginning time of the movable core 2, and the time T4 corresponds to the shift finishing time; that is, respective pairs of the magnetic pole faces of the stationary core 1 and the movable core 2 are contacted.

The sum of the applied voltage S2 to the electric coil 3 and the falling voltage S1 of the resistor R1 is equivalent to the voltage of the DC power source 10. The wave form of the applied voltage S2 has two peaks at the times T1 and T4.

This DC current voltage S2 is input to the differentiating circuit 6 which is a component of the movable core shift detector 5. Then the differentiating circuit 6 outputs a differentiated signal S3. This differentiated signal S3 is input to the level slice wave form shaping circuit 7, so that the shaped signal is output as a signal S4 which is a square wave pulse having a predetermined value at the time ranges from the time T1 to T2 and from the time T4 to T5.

The forbidding pulse output circuit 9 supplies a signal to the control signal output circuit 8 so as to forbid the square wave pulse between the times T1 and T2 to rise. According to this forbidding, a signal S5 having the square wave pulse between the times T4 and T5 is supplied to the sequence control device not shown from the output terminal 5e. This square wave pulse between the times T4 and T5 is used to confirm the time when magnetic pole faces of the stationary core 1 and the movable core 2 have been contacted.

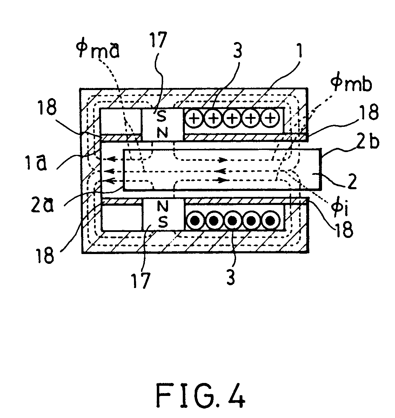

Nextly, the second embodiment of the present invention will be explained in conjunction with Fig.4.

This embodiment relates to an electromagnetic actuator capable of latching, whose composition is almost similar to that of Fig. 1 except for a cylindrical stationary core 1 which has one opened end, a movable core 2 set in the stationary core 1, a permanent magnet 17 fit in the stationary core 1, and a cylindrical non-magnetic guide tube 18.

Under the condition of the stationary core 1 and the movable core 2 shown in Fig.4, the second magnetic flux generated by the permanent magnet 17 is devided into magnetic flux flows φma and φmb represented by the dotted line shown in the drawing. Thus if the DC current voltage S2 applied to the electric coil 3 has the polarity as shown in the figure, the magnetic flux flows caused by the permanent magnet 17 will be overlapped with the first magnetic flux φi caused by the electric coil 3 during being energized. Accordingly, the movable core 2 is shifted into the contact state between the magnetic faces 1a and 2a.

Under this contact state, if the electric coil 3 is supplied with the current with the reverse polarity of that shown in the figure, the magnetic faces 1a and 2a will be returned to their separate state as shown in the figure. Owing to the existance of the magnetic flux φma or φmb, the voltage drop S1 at the time T4 shown in Fig.3 will be extremely remarkable, so that it can be easily confirmed.

Although the electromagnetic actuators according to the first and second embodiments contain the permanent magnet 17a or 17 inserted therein, the electromagnetic actuators according to the present invention are not limited to only these structures.

The present invention can be used as an operation confirming means for electromagnetic actuator without a contact point, which has the high reliability and economical merit in various industrial fields and private uses.

## Claims

1. An electromagnetic actuator comprising a stationary core (1) , a movable core (2) facingly arranged with respect to the stationary core and forming a closed magnetic circuit together with the stationary core, an electric coil (3) wound around the closed magnetic circuit for generating a first magnetic flux (φi, 17c) therein when the electric coil is supplied with an electric current, and a permanent magnet (17, 17a) generating a second magnetic flux (φma, φmb ; 17b, 17d) in the closed magnetic circuit, characterized in that the electromagnetic actuator further comprises a movable core shift detector (5) comprising a detection resistor (R1) and a differentiating circuit (6) connected to the electric coil for confirming the shift operation of the movable core with respect to the stationary core by detecting the time (T4) of completion of the shift operation by means of transitional fluctuating waveform of the DC current applied to said electric coil, the permanent magnet being fixed to the stationary core or to the movable core to generate the second magnetic flux which dividingly flows in parallel to and is overlapped with the first magnetic flux, the first and second magnetic fluxes acting in the same direction on the movable core during the shift operation and providing an extremely remarkable voltage drop (S1) in the detection resistor (R1) and a corresponding differentiated signal (S3) at the output of the differentiating circuit (6) at the time (T4) of completion of the shift operation.

## Patentansprüche

1. Elektromagnetischer Betätiger mit einem stationären Kern (1), einem bewegbaren Kern (2), der dem stationären Kern gegenüberliegend angeordnet ist und zusammen mit dem stationären Kern einen geschlossenen magnetischen Kreis bildet, einer elektrischen Spule (3), die um den geschlossenen magnetischen Kreis herumgewunden ist und in diesem einen ersten magnetischen Fluß (φi, 17c) erzeugt, wenn die elektrische Spule mit einem elektrischen Strom beschickt wird, und einem Dauermagneten (17, 17a), der in dem geschlossenen magnetischen Kreis einen zweiten magnetischen Fluß (φma, φmb; 17b, 17d) erzeugt, dadurch gekennzeichnet, daß der elektromagnetische Betätiger zusätzlich für den bewegbaren Kern einen Verschiebungsdetektor (5) umfaßt, der einen Erfassungswiderstand (R1) und eine mit der elektrischen Spule verbundene Differenzierschaltung (6) enthält und der eine Verschiebung des bewegbaren Kernes gegenüber dem stationären Kern durch Erfassen des Zeitpunktes (T4) einer Beendigung der Verschiebung anhand einer kurzzeitig schwankenden Wellenform des die elektrische Spule beschickenden Gleichstromes feststellt, wobei der Dauermagnet an dem stationären Kern oder an dem bewegbaren Kern zwecks Erzeugung des zweiten magnetischen Flusses befestigt ist, welcher aufgeteilt parallel zum ersten magnetischen Fluß fließt und von diesem überlappt wird, der erste und der zweite magnetische Fluß während der Verschiebung in derselben Richtung auf den bewegbaren Kern einwirken und zum Zeitpunkt (T4) der Beendigung der Verschiebung einen stark ausgeprägten Spannungsabfall (S1) an dem Erfassungswiderstand (R1) und ein entsprechendes differentiertes Signal (S3) am Ausgang der Differenzierschaltung (6) ergeben.

## Revendications

1. Actionneur électromagnétique comprenant un noyau fixe (1), un noyau mobile (1) disposé en face du noyau fixe et formant un circuit magnétique fermé conjointement avec ce noyau fixe, un enroulement électrique (3) enroulé autour du circuit magnétique fermé pour engendrer un premier flux magnétique (i, 17c) dans ce circuit lorsque l'enroulement électrique est alimenté avec un courant électrique, et un aimant permanent (17, 17a) engendrant un second flux magnétique (ma, mb; 17b, 17d) dans le circuit magnétique fermé, caractérisé en ce que l'actionneur électromagnétique comprend, en outre, un détecteur (5) de déplacement de noyau mobile comprenant une résistance de détection (R1) et un circuit différentiateur (6) connecté à l'enroulement électrique pour confirmer l'opération de déplacement du noyau mobile par rapport au noyau fixe par détection du temps (T4) d'achèvement de l'opération de déplacement au moyen d'une forme d'onde transitionnelle fluctuante du courant continu appliqué audit enroulement électrique, l'élément permanent étant fixé au noyau fixe ou au noyau mobile pour engendrer le second flux magnétique qui circule de façon divisée parallèlement au premier flux magnétique et est recouvert par ce premier flux magnétique, les premier et second flux magnétiques agissant dans le même sens sur le noyau mobile pendant l'opération de déplacement et engendrant une chute de tension (S1) extrêmement remarquable dans la résistance de détection (R1) et un signal correspondant différentié (S3) à la sortie du circuit différentiateur (6) au moment (T4) de l'achèvement de l'opération de déplacement.
